# EUROPEAN PATENT APPLICATION

(11) **EP 4 733 949 A1**
(43) Date of publication of application: **29.04.2026**
(21) Application number: 24853506.4
(22) Date of filing: 22.07.2024
(51) Int. Cl.: G06F 13/40, G06V 20/40

(54) **DEVICE CONNECTION METHOD AND DEVICE**

(30) Priority: 11.08.2023 CN 202311013381
(71) Applicant: Huawei Technologies Co., Ltd., Shenzhen, Guangdong 518129 (CN)
(72) Inventor: LENG, Yongqiang, Shenzhen, Guangdong 518129 (CN); SHI, Chunlei, Shenzhen, Guangdong 518129 (CN); SUN, Xia, Shenzhen, Guangdong 518129 (CN); YE, Fei, Shenzhen, Guangdong 518129 (CN); ZHAO, Rongjian, Shenzhen, Guangdong 518129 (CN)
(74) Representative: Gill Jennings & Every LLP
(86) International application number: PCT/CN2024/106711
(87) International publication number: WO 2025/036094

(57) **Abstract**

This application provides a device connection method and a device. The method may include: When detecting that a trigger condition is met, a second device may convert device connection information into binary encoded information, and control a display to perform a bright-dark change based on the binary encoded information; and when detecting a first operation, a first device obtains, by using a camera, a plurality of frames of images displayed by the second device, determines the binary encoded information based on the plurality of frames of images, determines the device connection information of the second device based on the binary encoded information, and further establishes a connection relationship with the second device based on the device connection information. According to the technical solutions, an interaction path of a device connection can be shortened, and a device connection procedure can be simplified. In this way, the device connection is more convenient.

## Description

This application claims priority to Chinese Patent Application No. 202311013381.2, filed with the China National Intellectual Property Administration on August 11, 2023 and entitled "DEVICE CONNECTION METHOD AND DEVICE", which is incorporated herein by reference in its entirety.

### TECHNICAL FIELD

Embodiments of this application relate to the field of electronic technologies, and more specifically, to a device connection method and a device.

### BACKGROUND

Currently, users have increasing devices, and scenarios requiring device connections are becoming more common. For example, currently, scanning a QR code is widely used to perform a device connection. However, this manner requires a device to display a QR code on a specific interface by using a user operation during the device connection, resulting in a lengthy interaction path of the device connection and cumbersome steps.

Therefore, how to conveniently implement the device connection becomes a technical problem to be resolved.

### SUMMARY

This application provides a device connection method and a device. According to the technical solutions, an interaction path of a device connection can be shortened, and a device connection procedure can be simplified. In this way, the device connection is more convenient.

According to a first aspect, a device connection method is provided. The method is applied to a first device, and the method includes: when detecting a first operation, obtaining, by using a camera, a plurality of frames of images displayed by a second device; determining binary encoded information based on the plurality of frames of images, where the binary encoded information includes device connection information of the second device; determining the device connection information of the second device based on the binary encoded information; and establishing a connection relationship with the second device based on the device connection information.

Based on this embodiment of this application, when detecting the first operation, the first device may obtain, by using the camera, the plurality of frames of images displayed by the second device, determine the binary encoded information based on the plurality of frames of images, determine the device connection information of the second device based on the binary encoded information, and further establish the connection relationship with the second device based on the device connection information.

In this way, during a device connection, a user can complete a connection between the first device and the second device based on the device connection information provided that the user captures or scans, by using the camera of the first device, the images displayed by the second device and identify the device connection information in the images after performing an operation of triggering device connection establishment. Therefore, an interaction path of the device connection can be shortened, and a device connection procedure can be simplified. In this way, the device connection is more convenient.

With reference to the first aspect, in an implementation of the first aspect, determining the binary encoded information based on the plurality of frames of images includes: performing signal processing on the plurality of frames of images to obtain first bright-dark change information in the plurality of frames of images; and determining the binary encoded information based on the first bright-dark change information.

For example, the signal processing manner may be envelope analysis or curve fitting.

A bright-dark change corresponding to the first bright-dark change information may be implemented by the second device by adjusting brightness of a light source, or a bright-dark change corresponding to the first bright-dark change information may be implemented by the second device by controlling a light source to be turned on or off, or a bright-dark change corresponding to the first bright-dark change information may be implemented by the second device by adjusting a brightness value of a pixel of the displayed image.

Based on this embodiment of this application, the first device may perform signal processing on the plurality of obtained frames of images to determine the first bright-dark change information in the images, and determine the binary encoded information based on the first bright-dark change information to determine the device connection information of the second device.

With reference to the first aspect, in an implementation of the first aspect, performing signal processing on the plurality of frames of images to obtain the first bright-dark change information in the plurality of frames of images includes: identifying a partial region that has a bright-dark change in the plurality of frames of images; and; performing signal processing on the partial region in the plurality of frames of images to obtain first bright-dark change information of the partial region.

Based on this embodiment of this application, the second device may control a part of light sources of a display to perform a bright-dark change based on the binary encoded information. Therefore, the first device may perform signal processing on the partial region that has the bright-dark change in the plurality of obtained frames of images, to obtain the corresponding first bright-dark change information. In this way, the corresponding binary encoded information can be identified while a data amount of signal processing can be reduced.

Optionally, the partial region may alternatively be any region with a preset area in the plurality of frames of images.

With reference to the first aspect, in an implementation of the first aspect, obtaining, by using the camera, the plurality of frames of images displayed by the second device includes: obtaining a plurality of frames of images of a plurality of display partitions of a display of the second device by using the camera; and determining the binary encoded information based on the plurality of frames of images includes: performing signal processing on the plurality of frames of images of the plurality of display partitions in a preset sequence, to obtain second bright-dark change information in the plurality of frames of images of the plurality of display partitions; and determining the binary encoded information based on the second bright-dark change information.

Based on this embodiment of this application, the second device may further divide the display into the plurality of display partitions, and may control the plurality of display partitions to perform the bright-dark change based on the binary encoded information in the preset sequence. In this case, the first device may obtain the plurality of frames of images of the plurality of display partitions, perform signal processing on the plurality of frames of images of the plurality of display partitions in the preset sequence, to obtain the second bright-dark change information in the plurality of frames of images of the plurality of display partitions, and further determine the corresponding binary encoded information.

In this case, a data amount of the binary encoded information that can be transmitted by the plurality of display partitions is larger, so that the first device can obtain more data from the plurality of frames of images of the plurality of display partitions.

With reference to the first aspect, in an implementation of the first aspect, obtaining, by using the camera, the plurality of frames of images displayed by the second device includes: obtaining the plurality of frames of images in a slow-motion mode of the camera.

In another example, the first device may alternatively obtain the plurality of frames of images in a normal mode of the camera. This is not limited in embodiments of this application.

With reference to the first aspect, in an implementation of the first aspect, the device connection information includes at least one of a connection pairing code of the second device, a product serial number of the second device, and a media access control MAC address of the second device.

In another example, the device connection information may further include other information, for example, mapping information of the product serial number of the second device and configuration information of the second device.

According to a second aspect, a device connection method is provided. The method is applied to a second device, and the method includes: when detecting that a trigger condition is met, converting device connection information of the second device into binary encoded information, where the device connection information is used by the second device to establish a connection relationship with a first device; and controlling a display of the second device to perform a bright-dark change based on the binary encoded information.

Based on this embodiment of this application, when detecting that the trigger condition is met, the second device may convert the device connection information into the binary encoded information, and control the display to perform the bright-dark change based on the binary encoded information. Therefore, the second device can transmit the binary encoded information outward, so that another device can perform a device connection process only by scanning or capturing a plurality of frames of images on the display of the second device during a device connection. In this way, the device connection is more convenient.

With reference to the second aspect, in an implementation of the second aspect, controlling the display of the second device to perform the bright-dark change based on the binary encoded information includes: controlling a light source at a backlight layer of the display to increase or decrease brightness based on the binary encoded information.

For example, for binary encoded information "1", the second device may increase a current or a voltage of the light source at the backlight layer, to increase brightness of the light source; or for binary encoded information "0", the second device may decrease a current or a voltage of the light source at the backlight layer, to decrease brightness of the light source.

According to the technical solution, the second device can control the display to perform the bright-dark change based on the binary encoded information, to transmit the binary encoded information outward.

With reference to the second aspect, in an implementation of the second aspect, controlling the display of the second device to perform the bright-dark change based on the binary encoded information includes: controlling a light source at a backlight layer of the display to be turned on or off based on the binary encoded information.

For example, for binary encoded information "1", the second device may control the light source at the backlight layer to be turned on; or for binary encoded information "0", the second device may control the light source at the backlight layer to be turned off.

According to the technical solution, the second device can control the display to perform the bright-dark change based on the binary encoded information, to transmit the binary encoded information outward.

With reference to the second aspect, in an implementation of the second aspect, controlling the display of the second device to perform the bright-dark change based on the binary encoded information includes: increasing a brightness value or decreasing a brightness value of a pixel of the image displayed on the display based on the binary encoded information.

For example, for binary encoded information "1", the second device may increase the brightness value of the pixel of the displayed image, so that the displayed image is brighter; or for binary encoded information "0", the second device may decrease the brightness value of the pixel of the displayed image, so that the displayed image is brighter.

According to the technical solution, the second device can control the display to perform the bright-dark change based on the binary encoded information, to transmit the binary encoded information outward.

With reference to the second aspect, in an implementation of the second aspect, the display includes a plurality of display partitions, and controlling the display of the second device to perform the bright-dark change based on the binary encoded information includes: controlling the plurality of display partitions to perform a bright-dark change based on the binary encoded information in a preset sequence.

Based on this embodiment of this application, the display of the second device may be divided into the plurality of display partitions, and the second device may control the plurality of display partitions to perform the bright-dark change based on the binary encoded information in the preset sequence. In this way, the second device can transmit a larger amount of data outward.

With reference to the second aspect, in an implementation of the second aspect, controlling the display of the second device to perform the bright-dark change based on the binary encoded information includes: controlling a partial region of the display of the second device to perform a bright-dark change based on the binary encoded information.

Based on this embodiment of this application, the second device may further control the partial region of the display to perform the bright-dark change based on the binary encoded information. In this way, encoding overheads of the second device can be reduced, and power consumption of the second device can be reduced.

According to a third aspect, a system is provided. The system includes a first device and a second device. The second device is configured to: when determining that a trigger condition is met, convert device connection information of the second device into binary encoded information, where the device connection information is used by the second device to establish a connection relationship with a first device; and control a display of the second device to perform a bright-dark change based on the binary encoded information.

The first device is configured to: when detecting a first operation, obtain, by using a camera, a plurality of frames of images displayed by the second device; determine the binary encoded information based on the plurality of frames of images, where the binary encoded information includes the device connection information of the second device; determine the device connection information of the second device based on the binary encoded information; and establish the connection relationship with the second device based on the device connection information.

According to a fourth aspect, a device is provided, including one or more processors and one or more memories. The one or more memories store one or more computer programs, and the one or more computer programs include instructions. When the instructions are executed by the one or more processors, the device connection method in any one of the first aspect and the possible implementations of the first aspect is performed.

According to a fifth aspect, a device is provided, including one or more processors and one or more memories. The one or more memories store one or more computer programs, and the one or more computer programs include instructions. When the instructions are executed by the one or more processors, the device connection method in any one of the second aspect and the possible implementations of the second aspect is performed.

According to a sixth aspect, a device connection apparatus is provided, including a module configured to implement the device connection method in any one of the first aspect and the possible implementations of the first aspect or the device connection method in any one of the second aspect and the possible implementations of the second aspect.

According to a seventh aspect, a chip is provided. The chip includes a processor and a communication interface. The communication interface is configured to: receive a signal, and transmit the signal to the processor. The processor processes the signal, so that the device connection method in any one of the first aspect and the possible implementations of the first aspect is performed.

According to an eighth aspect, a chip is provided. The chip includes a processor and a communication interface. The communication interface is configured to: receive a signal, and transmit the signal to the processor. The processor processes the signal, so that the device connection method in any one of the second aspect and the possible implementations of the second aspect is performed.

According to a ninth aspect, a readable storage medium is provided. The readable storage medium stores instructions. When the instructions are run on a device, the device connection method in any one of the first aspect and the possible implementations of the first aspect is performed.

According to a tenth aspect, a readable storage medium is provided. The readable storage medium stores instructions. When the instructions are run on a device, the device connection method in any one of the second aspect and the possible implementations of the second aspect is performed.

According to an eleventh aspect, a program product is provided. The program product includes program code. When the program code is run on an electronic device, the device connection method in any one of the first aspect and the possible implementations of the first aspect is performed.

According to a twelfth aspect, a program product is provided. The program product includes program code. When the program code is run on an electronic device, the device connection method in any one of the second aspect and the possible implementations of the second aspect is performed.

### BRIEF DESCRIPTION OF DRAWINGS

FIG. 1 is a diagram of a structure of a device according to an embodiment of this application;
FIG. 2 is a diagram of a software structure of a device according to an embodiment of this application;
FIG. 3 is a diagram of scenarios to which embodiments of this application are applicable;
FIG. 4 is a diagram of performing a bright-dark change based on binary encoded information by a display according to an embodiment of this application;
FIG. 5 is a diagram in which different display partitions of a display transmit different binary encoded information outward according to an embodiment of this application;
FIG. 6 is another diagram in which different display partitions of a display transmit different binary encoded information outward according to an embodiment of this application;
FIG. 7 is a diagram of transmitting different binary encoded information outward through bright display or dark display of an image according to an embodiment of this application;
FIG. 8 is an interaction diagram of a device connection method according to an embodiment of this application; and
FIG. 9 is a block diagram of a device according to an embodiment of this application.

### DESCRIPTION OF EMBODIMENTS

The following describes technical solutions of this application with reference to accompanying drawings.

A device connection method in embodiments of this application may be applied to devices such as a smartphone, a display, a smart television, a tablet computer, a notebook computer, a personal computer (personal computer, PC), an ultra-mobile personal computer (ultra-mobile personal computer, UMPC), a netbook, a vehicle-mounted device, a head unit, a wearable device, a foldable device, and an internet of things (internet of things, IOT) device with a display.

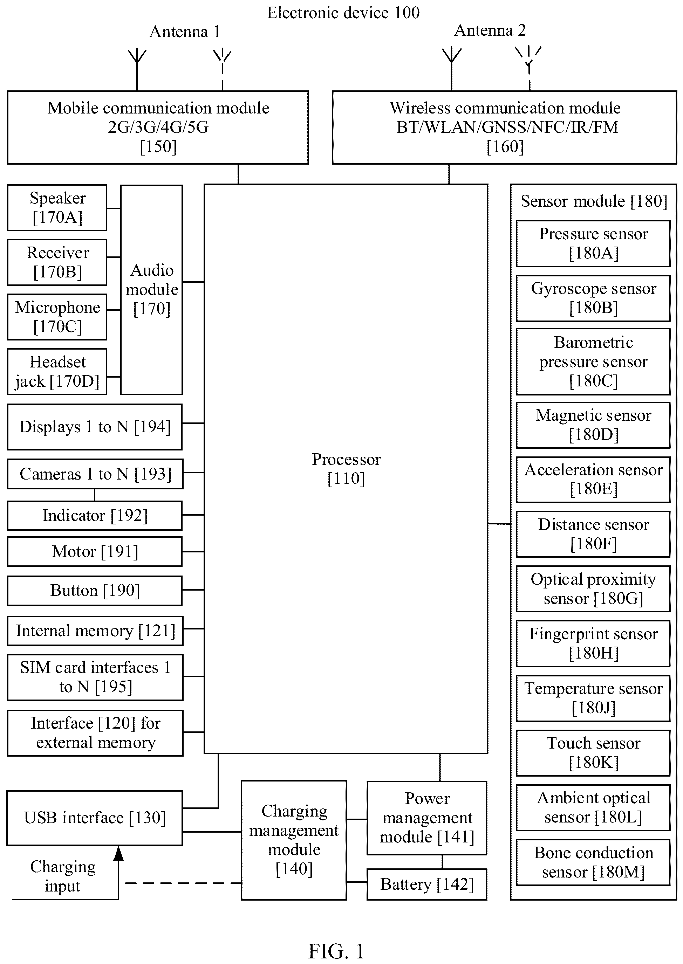

FIG. 1 is a diagram of a structure of a device 100. The device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of this application does not constitute a specific limitation on the device 100. In some other embodiments of this application, the device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

In this application, the processor 110 may be configured to: encode or decode an image. For example, a processor 110 in a device may be configured to perform a bright-dark change of a display based on binary encoded information, where the binary encoded information includes device connection information of the device. A processor in another device may be configured to identify the device connection information from an obtained image.

The controller may be a nerve center and a command center of the device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus interface, and/or the like.

The 12C interface is a bidirectional synchronization serial bus, and includes a serial data line (serial data line, SDA) and a serial clock line (serial clock line, SCL).

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be used to perform audio communication, and sample, quantize, and code an analog signal. In some embodiments, the audio module 170 may be coupled to the wireless communication module 160 through a PCM bus interface.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160.

The MIPI interface may be configured to connect the processor 110 to a peripheral component like the display 194 or the camera 193.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like.

The USB interface 130 is an interface that conforms to a USB standard specification, and may be specifically a mini USB interface, a micro USB interface, a USB type-C interface, or the like. The USB interface 130 may be configured to connect to a charger to charge the device 100, or may be configured to transmit data between the device 100 and a peripheral device.

It may be understood that an interface connection relationship between the modules that is shown in this embodiment of this application is merely an example for description, and does not constitute a limitation on the structure of the device 100. In some other embodiments of this application, the device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the device 100. The charging management module 140 may further supply power to the device by using the power management module 141 while charging the battery 142.

The power management module 141 is configured to connect to the battery 142, the charging management module 140, and the processor 110.

A wireless communication function of the device 100 may be implemented through the antenna 1, the antenna 2, the mobile communication module 150, the wireless communication module 160, the modem processor, the baseband processor, and the like.

The mobile communication module 150 may provide a wireless communication solution that is applied to the device 100 and that includes 2G/3G/4G/5G, or the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, an infrared (infrared, IR) technology, or the like and that is applied to the device 100.

In some embodiments, the antenna 1 and the mobile communication module 150 in the device 100 are coupled, and the antenna 2 and the wireless communication module 160 in the device 100 are coupled, so that the device 100 can communicate with a network and another device by using a wireless communication technology.

The device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), or may be a display panel made of one of materials such as an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the device 100 may include one or N displays 194, where N is a positive integer greater than 1.

In this embodiment of this application, the device 100 may display, on the display 194, an image, and display an image on which digital watermark information is superimposed.

The device 100 may implement a shooting function through the ISP, the camera 193, the video codec, the GPU, the display 194, the application processor, and the like.

The ISP is configured to process data fed back by the camera 193. The camera 193 is configured to capture a static image or a video. In this application, the camera 193 may be configured to obtain an image displayed on a display of another device.

The digital signal processor is configured to process a digital signal, and may process another digital signal in addition to the digital image signal.

The video codec is configured to compress or decompress a digital video. The device 100 may support one or more video codecs.

The interface 120 for external memory may be configured to connect to an external storage card, for example, a micro SD card, to extend a storage capability of the device 100.

The internal memory 121 may be configured to store computer-executable program code. The executable program code includes instructions. The processor 110 runs the instructions stored in the internal memory 121, to perform various functional applications and data processing of the device 100.

The device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a motion posture of the device 100.

The barometric pressure sensor 180C is configured to measure barometric pressure. In some embodiments, the device 100 calculates an altitude based on a value of the barometric pressure measured by the barometric pressure sensor 180C, to assist in positioning and navigation.

The acceleration sensor 180E may detect magnitudes of acceleration of the device 100 in various directions (usually on three axes).

The distance sensor 180F is configured to measure a distance.

The fingerprint sensor 180H is configured to collect a fingerprint.

The touch sensor 180K is also referred to as a touch panel. The touch sensor 180K may be disposed on the display 194, and the touch sensor 180K and the display 194 form a touchscreen, which is also referred to as a "touch screen".

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

The button 190 includes a power button, a volume button, and the like.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

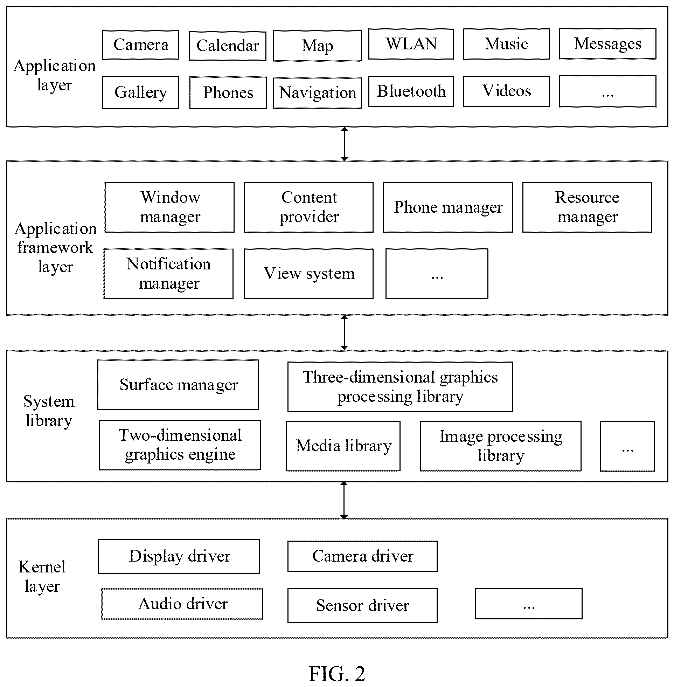

A software system of the device 100 may use a layered architecture, an event-driven architecture, a microkernel architecture, a microservice architecture, or a cloud architecture. In embodiments of this application, an operating system with a layered architecture is used as an example to describe the software structure of the device 100. FIG. 2 is a diagram of a software structure of a device according to an embodiment of this application.

Currently, users have increasing devices, and scenarios requiring device connections are becoming more common. For example, currently, scanning a QR code is widely used to perform a device connection. However, this manner requires a device to display a QR code on a specific interface by using a user operation during the device connection, resulting in a lengthy interaction path of the device connection and cumbersome steps.

In view of this, embodiments of this application provide a device connection method and a device. In the technical solutions, a device A may convert, into binary encoded information, device connection information used for a device connection; and when displaying an image, control a display to perform bright display and dark display of the display based on the binary encoded information, or control a display to be turned on or off, to transmit the binary encoded information. Another device B may obtain, by using a camera, a plurality of frames of images displayed by the device A, to obtain the binary encoded information in the plurality of frames of images, determine the device connection information based on the binary encoded information, and further establish a connection relationship with the device A.

In the technical solutions, when a device connection is performed between the device A and the device B, a user can trigger pairing and connection between the device A and the device B provided that the user scans, by using a camera of the device B, the plurality of frames of images displayed by the device A and determines the device connection information after performing an operation of triggering device connection establishment. Therefore, an interaction path of the device connection can be shortened, and a device connection procedure can be simplified. In this way, the device connection is more convenient.

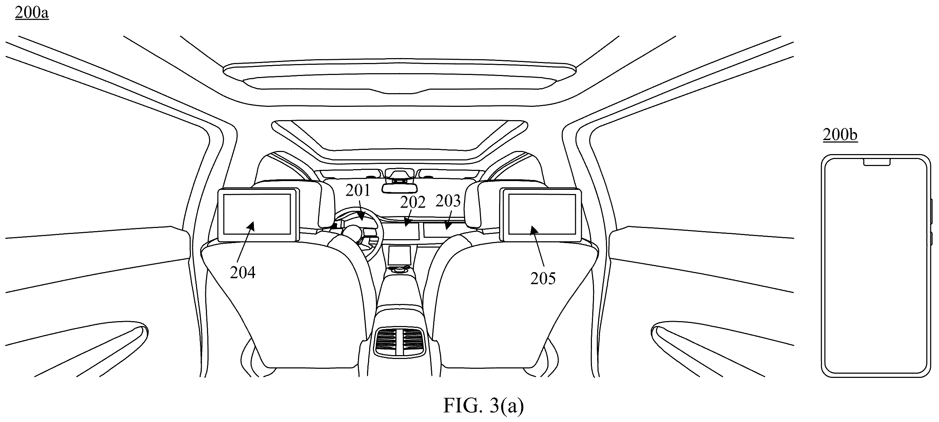

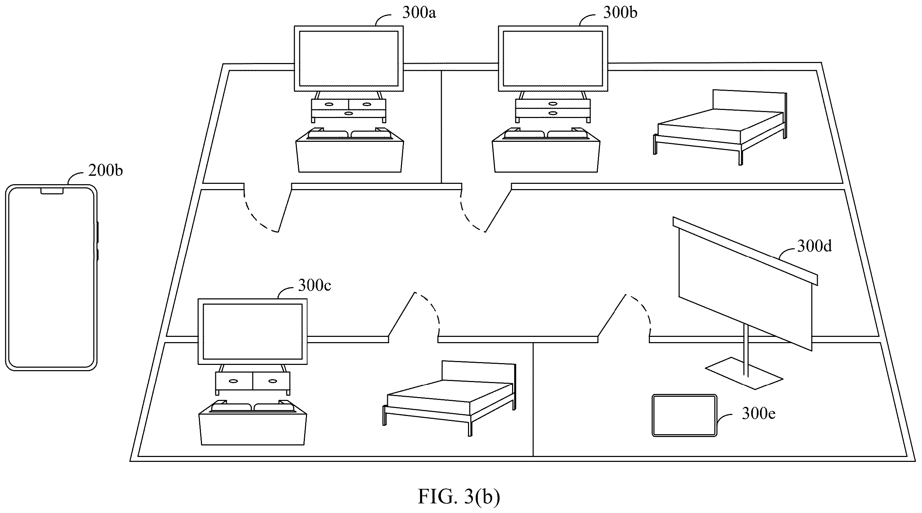

For example, FIG. 3 is a diagram of scenarios to which embodiments of this application are applicable. As shown in FIG. 3, an example in which a mobile phone 200b establishes a connection relationship with another device is used for description.

As shown in FIG. 3(a), a scenario may include a vehicle 200a and the mobile phone 200b. A cockpit of the vehicle 200a may include an instrument panel 201, a display 202 (or referred to as a central control screen), a display 203 (or referred to as a front passenger entertainment screen), a display 204 (or referred to as an entertainment screen in a left region of a second row), and a display 205 (or referred to as an entertainment screen in a right region of the second row).

In an example, the vehicle 200a may convert device connection information of the vehicle 200a into binary encoded information; and when the display 203 displays an image, control the display 203 to perform bright display or dark display of the image based on the binary encoded information.

For example, when the display 203 displays a wallpaper A, the vehicle 200a may control the display 203 to display a wallpaper A1 with brightness higher than that of the original wallpaper A in one frame, display a wallpaper A2 with brightness lower than that of the original wallpaper A in a next frame, display the wallpaper A1 in a next frame after that, display the wallpaper A2 in a next frame after that, and the rest may be deduced by analogy. In this way, it may be understood that the display 203 switches between brightness and darkness for a preset quantity of times (for example, 300) per second. That the display 203 displays the wallpaper A1 with the high brightness may represent encoding information "1", and that the display 203 displays the wallpaper A2 with the low brightness may represent encoding information "0". Therefore, the display 203 may transmit the binary encoded information outward based on a bright-dark change. When a user uses a camera of the mobile phone 200b to scan or photograph a plurality of frames of images displayed on the display 203, signal analysis may be performed on the plurality of obtained frames of images to identify the binary encoded information in the plurality of frames of images, and the device connection information of the vehicle 200a may be determined based on the binary encoded information. In this way, the mobile phone 200b can establish a connection relationship with the vehicle 200a.

It should be understood that the wallpaper A, the wallpaper A1, and the wallpaper A2 have same content, but have different brightness.

For another example, when the display 203 displays a wallpaper A, the vehicle 200a may control the display 203 to display the wallpaper A in one frame, turn off the display in a next frame, display the wallpaper A in a next frame after that, turn off the display in a next frame after that, and the rest may be deduced by analogy. In this way, it may be understood that the display 203 switches between on and off for a preset quantity of times (for example, 300) per second. That the display 203 is on may represent encoding information "1", and that the display 203 is off may represent encoding information "0". Therefore, the display 203 may transmit the binary encoded information outward based on a bright-dark change. It should be understood that "bright" herein may be understood as that the display is turned on and normally displays the image, and "dark" may be understood as that the display is turned off and does not display any image.

The device connection information may be one or more types of information such as a pairing code, a product serial number, a media access control (media access control, MAC) address, device model information, a device name, or device configuration information, or may be mapping of the foregoing information. For example, because the product serial number of the device is usually 15 digits, to reduce encoding overheads, the device identification information may be mapping of the product serial number of the device. For example, the product serial number of the device is mapped to a 6-digit or 8-digit number.

The following uses an example in which the mobile phone 200b is connected to the vehicle 200a through Bluetooth and the device connection information is a pairing code for description. For example, the pairing code may include six digits, for example, 656579. In this case, binary encoded information corresponding to the pairing code is "0110 0101 0110 0101 0111 1001". Binary encoded information "0" indicates dark display, and binary encoded information "1" indicates bright display. The display 203 may perform bright display or dark display of the image based on the binary encoded information. The vehicle 200a may control the display 203 to cyclically display the binary encoded information "0110 0101 0110 0101 0111 1001". In addition, the vehicle 200a may further broadcast a Bluetooth message outward, and the Bluetooth message may carry the device connection information of the vehicle 200a. The mobile phone 200b may obtain the plurality of frames of images of the display 203 by using the camera, further perform signal analysis on the plurality of frames of images to determine the binary encoded information, and determine the corresponding device connection information based on the binary encoded information. In addition, the mobile phone 200b scans the Bluetooth message of the vehicle 200a, and determines, based on the obtained device connection information, that a device that needs to be connected is the vehicle 200a. Therefore, the mobile phone 200b can perform Bluetooth pairing with the vehicle 200a to establish a Bluetooth communication connection.

Because a change frequency of the display 203 per second can reach the preset quantity of times (for example, 300), a change speed is fast, and a recognition range of human eyes is exceeded, eyes of the user cannot perceive the bright-dark change of the display 203. Therefore, from the perspective of the user, the display 203 normally displays the image, but can perform a device connection. Therefore, a good sense of technology and a good sense of experience are brought to the user.

It may be understood that the display 203 of the vehicle 200a may always display the image in the foregoing manner. In this way, the user may scan or photograph, at any time by using the mobile phone 200b, the image displayed on the display 203 to perform the device connection. Therefore, device connection efficiency and user experience can be improved.

In some other examples, the vehicle 200a controls the display 203 to display the image in the foregoing display manner only when the vehicle 200a detects that a trigger condition is met. Therefore, device power consumption can be reduced to some extent.

The trigger condition may be at least one of the following: a door on a side of the display 203 is closed, a person is on a seat on which the display 203 is located, a distance between the mobile phone 200b and the display 203 is less than or equal to a preset distance, and the like.

It should be understood that, in this embodiment of this application, an example in which the display 203 of the vehicle 200a displays the image in the foregoing display manner is used for description, but this should not constitute a limitation on this application. In another example, another display in the vehicle 200a may also display the image in the foregoing display manner. This is not limited in embodiments of this application.

In this application, the technical solution may be further applied to a device connection solution in a home scenario. Refer to FIG. 3(b). A user's home may include devices such as a smart television 300a, a smart television 300b, a smart television 300c, a PC 300d, and a tablet 300e.

The smart television 300a, the smart television 300b, the smart television 300c, the PC 300d, and the tablet 300e may display an image in the foregoing display manner, or may display an image in the foregoing display manner when detecting that the foregoing trigger condition is met. Therefore, when a user wants to establish a device connection, the user may scan or photograph, by using the mobile phone 200b, the image displayed by the device to perform the device connection. According to the technical solution, an interaction path of the device connection can be shortened, and a device connection procedure can be simplified. In this way, the device connection is more convenient.

For example, when the mobile phone 200b and the smart television 300c are in a same local area network or log in to a same Huawei account, and device connection information is a pairing code, a product serial number, or a MAC address of the device, after obtaining device connection information of the smart television 300c, the mobile phone 200b may obtain a pairing code, a product serial number, or a MAC address of the smart television 300c from the device connection information. Therefore, the mobile phone 200b can establish a connection relationship with the smart television 300c.

Alternatively, when the mobile phone 200b and the smart television 300c are in a same local area network or log in to a same Huawei account, and device connection information is a digital number mapped by a product serial number of the smart television 300c, after obtaining device connection information of the smart television 300c, the mobile phone 200b may obtain the digital number mapped by the product serial number of the smart television 300c from the device connection information, and further determine the smart television 300c based on the digital number. Therefore, the mobile phone 200b can establish a connection relationship with the smart television 300c.

In the foregoing implementation, an entire display of the device may synchronously perform bright display or dark display based on binary encoded information. Therefore, when performing the device connection, the mobile phone 200b can obtain the binary encoded information, determine the device connection information, and trigger connection and pairing to perform the device connection, provided that the mobile phone 200b can scan or photograph a part of the display. Therefore, when the display is partially blocked, the device connection can still be conveniently performed. This expands a use range of the device connection.

In this embodiment of this application, the device may control the display to perform bright display or dark display based on the binary encoded information in the following several manners:
Manner 1: The device controls the display to synchronously perform bright display or dark display based on the binary encoded information.
Manner 2: The device controls the display to perform bright display or dark display in different regions based on the binary encoded information.
Manner 3: The device controls, based on the binary encoded information, brightness of the image displayed on the display to perform bright display or dark display.

Specifically, in an example of Manner 1, the device may control, by turning on a light source at a backlight layer of the display, the display to be turned on, and control, by turning off the light source at the backlight layer of the display, the display to be turned off. In the technical solution, that the display is turned on may be understood as bright display, and that the display is turned off may be understood as dark display. Whether the display is turned on or off depends on the light source at the backlight layer of the display. When the light source emits light, the display is in an on state. When the light source is turned off, the display is in an off state. The device may control, based on the binary encoded information, the light source at the backlight layer to emit light or be turned off, to turn on or off the display.

For example, for binary "1", the light source is controlled to be turned on, so that the display is turned on; or for binary "0", the light source is controlled to be turned off, so that the display is turned off.

It may be understood that turning on of the light source may also be understood as emitting light by the light source.

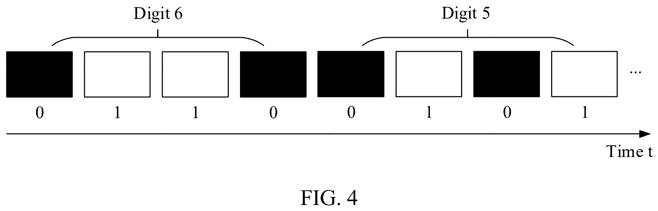

For example, FIG. 4 is a diagram of performing a bright-dark change based on binary encoded information by a display according to an embodiment of this application.

Before displaying an image, a device needs to convert device connection information into binary encoded information. For example, the device connection information is a pairing code. In this case, the device may first convert the pairing code into corresponding binary encoded information.

Refer to FIG. 4. For example, for a digit 6 in the pairing code, binary encoded information corresponding to the digit 6 is "0110". In this case, a device A may control, based on the binary encoded information "0110", a light source at a backlight layer to emit light or be turned off. Specifically, the light source may perform an "off-on-maintain on-off" sequence to transmit the binary encoded information "0110" outward. For a digit 5 in the pairing code, binary encoded information corresponding to the digit 5 is "0101". In this case, the device A may control, based on the binary encoded information "0101", the light source at the backlight layer to emit light or be turned off. Specifically, the light source may perform an "off-on-off-on" sequence to transmit the binary encoded information "0101" outward. It should be understood that the device A may process another digit in the pairing code in a same manner.

It should be understood that "off" or "on" of the light source at the backlight layer herein may be a state of the light source in one frame.

For example, the device A may turn on and off the light source by adjusting on and off of the light source at the backlight layer.

When a user wants to perform a device connection, for example, the user wants to establish a connection relationship with the device A by using a device B, the device B may invoke, based on a first operation of the user, a camera to scan or photograph a plurality of frames of images displayed on a display of the device A. Then, the device B may perform signal processing on the plurality of obtained frames of images to identify binary encoded information in the plurality of frames of images, and further determine a corresponding pairing code based on the binary encoded information. Then, the device B may send a pairing request to the device A based on the pairing code, to perform a device connection.

It may be understood that, to enable the device B to obtain correct binary encoded information, the device A may control the light source at the backlight layer to circularly perform a bright-dark change based on the binary encoded information. Before each cycle, the device A may control brightness of a preset quantity of consecutive frames to be the same, serving as a marker. In this way, when performing signal processing on the plurality of obtained frames of images, the device B may perform identification starting from a frame after the marker, to accurately obtain the corresponding binary encoded information. For example, the pairing code includes 6 digits. In this case, the binary encoded information is binary encoded information corresponding to the 6 digits. Before controlling the light source at the backlight layer to circularly perform the bright-dark change based on the binary encoded information, the device A first controls the light source at the backlight layer to be turned on for three consecutive frames or to be turned off for three consecutive frames, serving as a marker. Alternatively, the preset quantity may be another value, for example, 4. A specific value of the preset quantity is not limited in embodiments of this application.

For example, the device B may perform signal processing on the plurality of obtained frames of image sequence in a manner like envelope analysis or curve fitting. A specific signal processing manner is not limited in embodiments of this application.

For example, the signal processing manner is envelope analysis. After envelope analysis is performed on the plurality of obtained frames of images, a corresponding envelope spectrum graph may be obtained. Therefore, the corresponding binary encoded information may be further determined.

The first operation may be an operation of tapping a scanning sub-function or a slow-motion sub-function in a camera application; or the first operation may be an operation of sliding from a fixed region of a display of the device B by the user, for example, the first operation is an operation of sliding from a corner of the display by the user at a specific angle; or a control center of a pull-down menu bar of the device B has a shortcut function button, and the first operation may be an operation of tapping the function button by the user.

In this embodiment of this application, an example in which the device connection information is a pairing code is used for description. In another example, when the device connection information is information like a product serial number, a MAC address, or device model information, the device may perform processing in a same manner. For brevity, details are not described herein again.

Because a frequency at which the light source at the backlight layer of the display changes per second can reach the preset quantity of times (for example, 300 or 150 times), when the light source performs the bright-dark change based on the binary encoded information, the change frequency can exceed a recognition range of human eyes. The change frequency herein may be understood as a quantity of frames included in the light source per second. In this way, the user cannot perceive the bright-dark change of the display. This device connection manner is convenient and can improve user experience.

It may be understood that the entire display of the device A may be turned on or off synchronously based on the binary encoded information, or a part of the display of the device A may be turned on or off synchronously based on the binary encoded information.

For example, the device A may further control a display region of a preset area or a preset shape in the middle of the display to be turned on or off based on the binary encoded information, and a remaining part normally performs display.

For example, the preset area is 1/N of an area of the display, and N is a positive integer greater than 1. The preset shape is a circle, a rectangle, or the like.

Alternatively, the device A may control a display region of a preset area in an upper left corner, an upper right corner, a lower left corner, or a lower right corner of the display to be turned on or off based on the binary encoded information. For example, the preset area is 1/N of the area of the display, and N is a positive integer greater than 1.

When the part of the display of the device A is synchronously turned on or off based on the binary encoded information, during the device connection, device pairing and the device connection can be performed only by scanning an image of a specific display region. Therefore, a sense of technology of the device connection can be improved.

In some other examples of Manner 1, the device A may further adjust a voltage or a current of the light source at the backlight layer, to implement bright display or dark display of the display.

When the voltage of the light source at the backlight layer is high or the current is large, brightness of the light source is high, and the image displayed on the display is brighter; or when the voltage of the light source at the backlight layer is low or the current is small, brightness of the light source is low, and the image displayed on the display is darker.

For example, when the binary encoded information is "1", the device may increase the voltage or current of the light source, so that brightness of the image in a current frame is higher; or when the binary encoded information is "0", the device may decrease the voltage or current of the light source, so that the brightness of the image in a current frame is lower.

It should be understood that an increased brightness value of the light source may be the same as a decreased brightness value of the light source. For example, when the binary encoded information is "1", brightness of the light source may be increased to 1.1 times of original brightness; or when the binary encoded information is "0", brightness of the light source may be decreased to 0.9 times of original brightness.

In this way, the device can adjust the brightness of the light source by using a current or a voltage, so that the display can implement a high-frequency bright-dark change, and the user is unaware of the change.

In Manner 2, different display partitions of the display of the device may transmit different binary encoded information outward. For example, the device may divide the display into M display partitions, where M is a positive integer greater than or equal to 2.

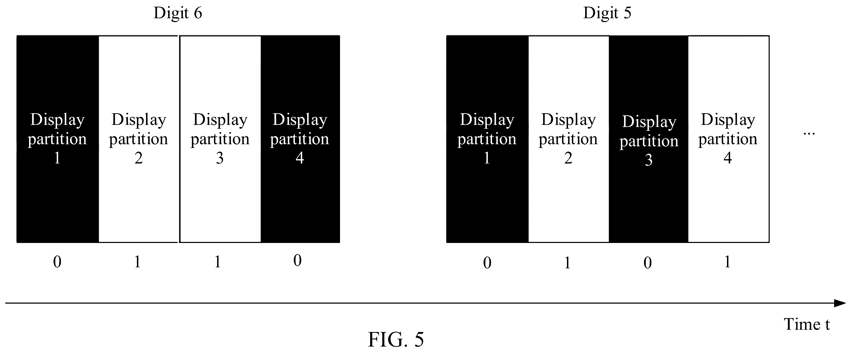

For example, FIG. 5 is a diagram in which different display partitions of a display transmit different binary encoded information outward according to an embodiment of this application.

It is assumed that a device A equally divides a display into four display partitions. Refer to FIG. 5. The display of the device A may include a display partition 1, a display partition 2, a display partition 3, and a display partition 4.

It is assumed that the foregoing device connection information is a pairing code "656579". In this case, a device may first convert the pairing code into corresponding binary encoded information "0110 0101 0110 0101 0111 1001".

For example, for a digit 6 in the pairing code, binary encoded information corresponding to the digit 6 is "0110". In this case, the device A may control, based on the binary encoded information "0110", a light source at a backlight layer corresponding to the display partition 1 to be turned off, a light source at a backlight layer corresponding to the display partition 2 to be turned on, a light source at a backlight layer corresponding to the display partition 3 to be turned on, and a light source at a backlight layer corresponding to the display partition 4 to be turned off. In this case, the display partition 1 may transmit binary encoded information "0" outward, the display partition 2 may transmit binary encoded information "1" outward, the display partition 3 may transmit binary encoded information "1" outward, and the display partition 4 may transmit binary encoded information "0" outward. In this way, the entire display may transmit the binary encoded information "0110" outward.

For a digit 5 in the pairing code, binary encoded information corresponding to the digit 5 is "0101". In this case, the device A may control, based on the binary encoded information "0101", the light source at the backlight layer corresponding to the display partition 1 to be turned off, control the light source at the backlight layer corresponding to the display partition 2 to be turned on, control the light source at the backlight layer corresponding to the display partition 3 to be turned off, and control the light source at the backlight layer corresponding to the display partition 4 to be turned on. In this case, the display partition 1 may transmit binary encoded information "0" outward, the display partition 2 may transmit binary encoded information "1" outward, the display partition 3 may transmit binary encoded information "0" outward, and the display partition 4 may transmit binary encoded information "1" outward. In this way, the entire display may transmit the binary encoded information "0101" outward.

It should be understood that the device A may process another digit in the pairing code in a same manner.

When a user wants to perform a device connection, for example, the user wants to establish a connection relationship with the device A by using a device B, the device B may invoke, based on a first operation of the user, a camera to scan or photograph a plurality of frames of images displayed on the display of the device A. Then, the device B may perform signal processing on the plurality of obtained frames of images, identify each display partition of the display or identify the entire display to identify the binary encoded information in the plurality of frames of images, and further determine the corresponding pairing code based on the binary encoded information. Then, the device B may send a pairing request to the device A based on the pairing code, to perform a device connection.

In this case, the device B may include a processing module that can perform signal processing, and the processing module can perform signal processing on images of the display partitions of the display in a specific sequence to identify the corresponding binary encoded information. For example, the processing module identifies the corresponding binary encoded information in a sequence of the display partition 1, the display partition 2, the display partition 3, and the display partition 4.

In another example, it is assumed that a pairing code is "656579". In this case, binary encoded information corresponding to the pairing code is "0110 0101 0110 0101 0111 1001". The display partition 1 may be used to transmit binary encoded information "0110 01", the display partition 2 may be used to transmit binary encoded information "01 0110", the display partition 3 may be used to transmit binary encoded information "0101 01", and the display partition 4 may be used to transmit binary encoded information "11 1001". The device B may invoke, based on a first operation of the user, a camera to scan or photograph a plurality of frames of images displayed on the display of the device A. Then, the device B may perform signal processing on the plurality of obtained frames of images, identify the binary encoded information transmitted in each display partition, and concatenate the binary encoded information corresponding to the display partition 1, the display partition 2, the display partition 3, and the display partition 4 in a sequence of the display partition 1, the display partition 2, the display partition 3, and the display partition 4 to obtain "0110 0101 0110 0101 0111 1001" and convert "0110 0101 0110 0101 0111 1001" into a number "656579". Then, the device B may send a pairing request to the device A based on the pairing code, to perform a device connection.

In another example, the device A may alternatively use one of the plurality of display partitions to transmit the binary encoded information corresponding to the pairing code, and the other display partitions transmit other information. For example, the device A may use the display partition 1 to transmit the binary encoded information corresponding to the pairing code, and use the display partition 2, the display partition 3, and the display partition 4 to transmit the other information, for example, a name and configuration information of the device A. Alternatively, one or more of the display partition 2, the display partition 3, and the display partition 4 may not transmit information. This is not limited in embodiments of this application.

In this way, because different display partitions of the display may transmit different binary encoded information, the entire display may transmit more data, for example, information such as the pairing code and the device name.

It may be understood that FIG. 5 is described by using an example in which the display of the device is divided into the four different display partitions. However, a specific quantity M of the display partitions is not limited in embodiments of this application. When M is another value, for a technical solution, refer to the related descriptions in FIG. 5.

In some other examples, a sum of areas of the display partition 1, the display partition 2, the display partition 3, and the display partition 4 may be 1/N of an area of the display, where N is a positive integer greater than 1. In this case, specific location distribution of the plurality of display partitions of the display is not limited in embodiments of this application. For example, the plurality of display partitions may be located in the middle of the display, or the plurality of display partitions may be located in a corner of the display.

It should be understood that the display is divided into the display partition 1, the display partition 2, the display partition 3, and the display partition 4 in a vertical direction as an example for description. In another example, the display may alternatively be divided into the display partition 1, the display partition 2, the display partition 3, and the display partition 4 in a horizontal direction or a diagonal direction.

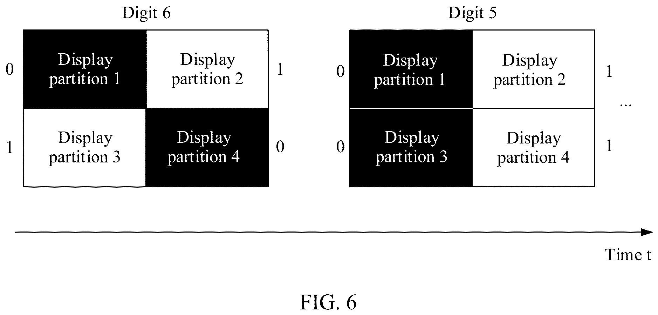

In some other examples, the device A may alternatively divide the display into the plurality of display partitions in another equal division manner. FIG. 6 is another diagram in which different display partitions of a display transmit different binary encoded information outward according to an embodiment of this application.

Refer to FIG. 6. A device A may alternatively equally divide a display into four display partitions in a corner division manner. A display partition 1 is located at an upper left corner of the display, a display partition 2 is located at an upper right corner of the display, a display partition 3 is located at a lower left corner of the display, a display partition 4 is located at a lower right corner of the display, and each display partition may transmit one piece of binary encoded information.

It is assumed that the foregoing device connection information is a pairing code, a device may first convert the pairing code into corresponding binary encoded information. For a manner in which the device A controls, based on the binary encoded information, each display partition to perform bright display or dark display and a manner in which each display partition transmits different binary encoded information outward, refer to the foregoing related descriptions. For brevity, details are not described herein again.

In this case, the device B may include a processing module that can perform signal processing, and the processing module can perform signal processing on images of the display partitions of the display in a specific sequence to identify the corresponding binary encoded information. For example, the processing module identifies the corresponding binary encoded information in a sequence of the display partition 1, the display partition 2, the display partition 3, and the display partition 4.

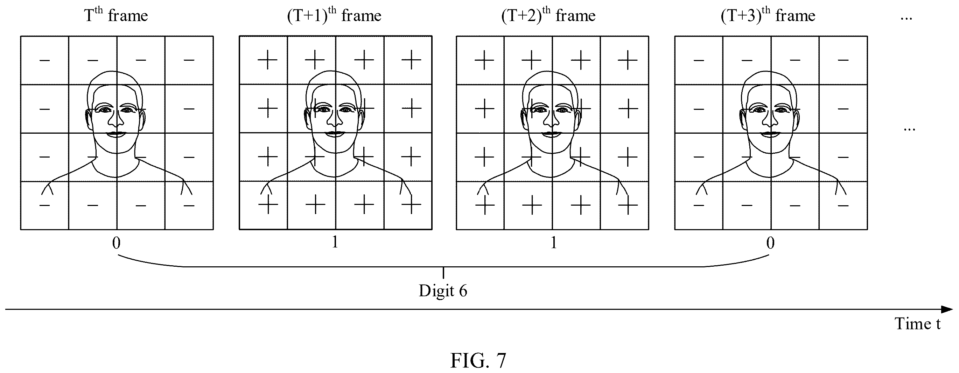

In Manner 3, the device A may control bright display or dark display of the image displayed on the display, to transmit the binary encoded information. FIG. 7 is a diagram of transmitting different binary encoded information outward through bright display or dark display of an image according to an embodiment of this application.

As shown in FIG. 7, a device A may adjust brightness of a displayed image based on binary encoded information, and transmit the binary encoded information through bright display or dark display of the image.

For binary encoded information "0", the device A may decrease the brightness of the image based on the originally displayed image; or for binary encoded information "1", the device A may increase the brightness of the image based on the originally displayed image, to implement a bright-dark change.

An example in which the device connection information is a pairing code and the pairing code is "656579" is still used for description. For a digit 6, binary encoded information corresponding to the digit 6 is "0110". For a T^{th} frame of image in which binary encoded information "0" starts to be transmitted, the device A may decrease a brightness value of a pixel of the T^{th} frame of image, and a decreased brightness value is less than a threshold. In this case, human eyes cannot distinguish a brightness value change. For (T+1)^{th} frame and (T+2)^{th} frame of images in which binary encoded information "1" is transmitted, the device A may increase brightness values of pixels of the (T+1)^{th} frame and (T+2)^{th} frame of images, and increased brightness values are the same as the brightness value decreased in the T^{th} frame. Similarly, for a (T+3)^{th} frame of image in which binary encoded information "0" is transmitted, the device A may decrease the brightness value of the pixel in the T^{th} frame of image. Then, the device A may continue to transmit another digit in the foregoing manner.

It should be understood that, before the T^{th} frame of image, a plurality of consecutive frames of images that serve as marker frames and that have same brightness may be further included. For details, refer to the foregoing related descriptions. For brevity, details are not described again.

It should be understood that for a manner in which a device B obtains binary encoded information by obtaining a plurality of frames of images displayed by the device A, refer to the foregoing related descriptions.

In some other examples, when increasing the brightness of the image or decreasing the brightness of the image based on the binary encoded information, the device A may increase or decrease brightness of the entire image, or may increase or decrease brightness of a part of the image. This is not limited in embodiments of this application.

In some other examples, several original images may be further included between the T^{th} frame of image and the (T+1)^{th} frame of image, between the (T+1)^{th} frame of image and the (T+2)^{th} frame of image, and between the (T+2)^{th} frame of image and the (T+3)^{th} frame of image. This is not limited in embodiments of this application. In this case, the device A does not need to process each frame of image, so that encoding overheads of the device A can be reduced, and power consumption of the device A can be reduced.

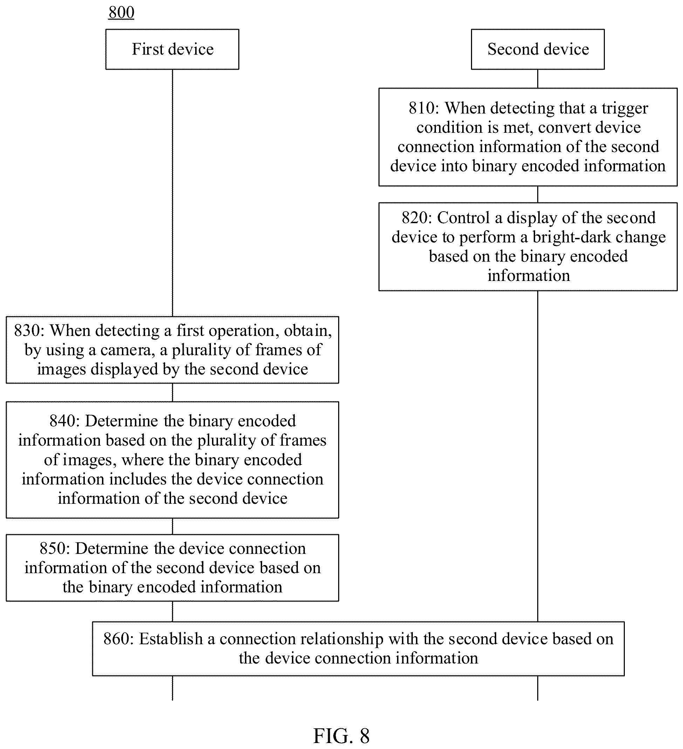

FIG. 8 is an interaction diagram of a device connection method according to an embodiment of this application. As shown in FIG. 8, the method 800 is applied to a first device and a second device, and the method 800 may include step 810 to step 860.

810: When detecting that a trigger condition is met, the second device converts device connection information of the second device into binary encoded information, where the device connection information is used by the second device to establish a connection relationship with the a device.

For example, the trigger condition may include at least one of the following conditions: The second device is a vehicle, and a door on one side of the vehicle (for example, a passenger seat door) is closed; there is a person on a passenger seat; and a distance between the second device and the first device is less than or equal to a preset distance.

The device connection information may include at least one of a connection pairing code of the second device, a product serial number of the second device, or a media access control MAC address of the second device.

For example, if the device connection information is a connection pairing code "656579", binary encoded information converted from the device connection information is "0110 0101 0110 0101 0111 1001".

820: The second device controls a display of the second device to perform a bright-dark change based on the binary encoded information.

The second device may control the display to perform the bright-dark change based on the binary encoded information. For example, for binary encoded information "1", the display may perform bright display; or for binary encoded information "0", the display may perform dark display. Alternatively, for binary encoded information "1", the display may normally display; or for binary encoded information "0", the display may display nothing, in other words, the display may be turned off.

In this way, the second device can control a bright-dark change of the display to transmit the binary encoded information.

In some other examples, the second device may alternatively always convert the device connection information into the binary encoded information without detecting whether the trigger condition is met, and control the display to perform the bright-dark change based on the binary encoded information.

It may be understood that the bright-dark change in embodiments of this application may also be referred to as a light-dark change, a brightness change, or the like.

830: When detecting a first operation, the first device obtains, by using a camera, a plurality of frames of images displayed by the second device.

Optionally, the first device and the second device may be located in a same local area network, or the first device and the second device may log in to a same account (for example, a Huawei account).

The first operation may be an operation of triggering the first device to perform a device connection. For example, the first operation may be an operation of tapping a scanning sub-function or a slow-motion sub-function in a camera application; or the first operation may be an operation of sliding from a fixed region of the display of the first device by a user, for example, the first operation is an operation of sliding from a corner of the display by the user at a specific angle; or a control center of a pull-down menu bar of the first device has a shortcut function button, and the first operation may be an operation of tapping the function button by the user; or a lock screen of the first device includes a shortcut button, and the first operation may be an operation of tapping the shortcut button by the user. A specific form of the first operation is not limited in embodiments of this application.

840: The first device determines the binary encoded information based on the plurality of frames of images, where the binary encoded information includes the device connection information of the second device.

In some examples, the first device may perform signal processing on entirety of the plurality of frames of images, to determine bright-dark change information in the plurality of frames of images, and determine the binary encoded information based on the bright-dark change information.

In some other examples, the first device may further perform signal processing on a partial region in the plurality of frames of images, to determine bright-dark change information of the partial region in the plurality of frames of images, and determine the binary encoded information based on the bright-dark change information. In this way, the first device can also perform the device connection without obtaining images of the entire display of the second device. This can improve convenience of the device connection.

In some other examples, the first device may further obtain a plurality of frames of images of a plurality of display partitions of the display of the second device, perform signal processing on the plurality of frames of images of the plurality of display partitions in a preset sequence to obtain bright-dark change information of the plurality of frames of images of the plurality of display partitions, and determine the binary encoded information based on the bright-dark change information.

850: The first device determines the device connection information of the second device based on the binary encoded information.

After determining the binary encoded information, the first device may decode the binary encoded information to obtain the corresponding device connection information.

860: The first device establishes the connection relationship with the second device based on the device connection information.

The first device may determine the second device based on the obtained device connection information, and further establish the connection relationship with the second device. It should be understood that for a technical solution in which the first device establishes the connection relationship with the second device, refer to the foregoing related descriptions. Details are not described herein again.

In an embodiment of this application, the second device may convert the device connection information into the binary encoded information, and control the display to perform the bright-dark change based on the binary encoded information. The first device may obtain the plurality of frames of images of the display of the second device by using the camera when detecting the first operation, determine the binary encoded information transmitted by the plurality of frames of images, determine the device connection information in the binary encoded information, and further establish the connection relationship with the second device based on the device connection information of the second device.

In this way, during the device connection, the user can complete a connection between the first device and the second device provided that the user scans, by using the camera of the first device, the images on the display of the second device and obtains the device connection information indicated by the images after performing an operation of triggering device connection establishment. Therefore, an interaction path of the device connection can be shortened, and a device connection procedure can be simplified. In this way, the device connection is more convenient.

In some embodiments, that the first device determines the binary encoded information based on the plurality of frames of images includes:
The first device performs signal processing on the plurality of frames of images to obtain first bright-dark change information in the plurality of frames of images; and
the first device determines the binary encoded information based on the first bright-dark change information.

For example, the signal processing manner may be envelope analysis or curve fitting.

A bright-dark change corresponding to the first bright-dark change information may be implemented by the second device by adjusting brightness of a light source, or a bright-dark change corresponding to the first bright-dark change information may be implemented by the second device by controlling a light source to be turned on or off, or a bright-dark change corresponding to the first bright-dark change information may be implemented by the second device by adjusting a brightness value of a pixel of the displayed image.

Based on this embodiment of this application, the first device may perform signal processing on the plurality of obtained frames of images to determine the first bright-dark change information in the images, and determine the binary encoded information based on the first bright-dark change information to determine the device connection information of the second device.

In some embodiments, that the first device performs signal processing on the plurality of frames of images to obtain the first bright-dark change information in the plurality of frames of images includes:
The first device identifies a partial region that has a bright-dark change in the plurality of frames of images; and
the first device performs signal processing on the partial region in the plurality of frames of images to obtain first bright-dark change information of the partial region.

For example, the partial region may be a region at a preset location of the plurality of frames of images, or the partial region may be a region with a preset area or shape at a middle location of the plurality of frames of images.

Based on this embodiment of this application, the second device may control a part of light sources of the display to perform a bright-dark change based on the binary encoded information. Therefore, the first device may perform signal processing on the partial region that has the bright-dark change in the plurality of obtained frames of images, to obtain the corresponding first bright-dark change information. In this way, the corresponding binary encoded information can be identified while a data amount of signal processing can be reduced.

Optionally, the partial region may alternatively be any region with the preset area in the plurality of frames of images. For example, a bright-dark change is synchronously performed on the entire region in the plurality of frames of images, so that the second device can obtain the bright-dark change information only by obtaining the partial region in the plurality of frames of images, to determine the corresponding binary encoded information. This can expand a usage scenario of the device connection.

In some embodiments, that the first device obtains, by using the camera, the plurality of frames of images displayed by the second device includes:
The first device obtains the plurality of frames of images of the plurality of display partitions of the display of the second device by using the camera.

That the first device determines the binary encoded information based on the plurality of frames of images includes:
The first device performs signal processing on the plurality of frames of images of the plurality of display partitions in the preset sequence, to obtain the second bright-dark change information in the plurality of frames of images of the plurality of display partitions; and
the first device determines the binary encoded information based on the second bright-dark change information.

For example, refer to FIG. 5 and FIG. 6. The display of the second device may be divided into the plurality of display partitions. The preset sequence may be a sequence of a display partition 1 to a display partition 4. As shown in FIG. 5, the display partition 1 to the display partition 4 may transmit binary encoded information "0110" at a time. Alternatively, the preset sequence may be that each display partition displays a plurality of pieces of binary encoded information, and then the first device may splice the binary encoded information to obtain final binary encoded information.

Based on this embodiment of this application, the second device may further divide the display into the plurality of display partitions, and may control the plurality of display partitions to perform the bright-dark change based on the binary encoded information in the preset sequence. In this case, the first device may obtain the plurality of frames of images of the plurality of display partitions, perform signal processing on the plurality of frames of images of the plurality of display partitions in the preset sequence, to obtain the second bright-dark change information in the plurality of frames of images of the plurality of display partitions, and further determine the corresponding binary encoded information.

In this case, a data amount of the binary encoded information that can be transmitted by the plurality of display partitions is larger, so that the first device can obtain more data from the plurality of frames of images of the plurality of display partitions.

In some embodiments, that the first device obtains, by using the camera, the plurality of frames of images displayed by the second device includes:
The first device obtains the plurality of frames of images in a slow-motion mode of the camera.

In another example, the first device may alternatively obtain the plurality of frames of images in a normal mode of the camera. This is not limited in embodiments of this application.

In some embodiments, the device connection information includes at least one of the connection pairing code of the second device, the product serial number of the second device, and the media access control MAC address of the second device.

In another example, the device connection information may further include other information, for example, mapping information of the product serial number of the second device and configuration information of the second device.

In some embodiments, that the second device controls the display of the second device to perform the bright-dark change based on the binary encoded information includes:
The second device controls a light source at a backlight layer of the display to increase or decrease brightness based on the binary encoded information.

For example, for binary encoded information "1", the second device may increase a current or a voltage of the light source at the backlight layer, to increase brightness of the light source; or for binary encoded information "0", the second device may decrease a current or a voltage of the light source at the backlight layer, to decrease brightness of the light source.

According to the technical solution, the second device can control the display to perform the bright-dark change based on the binary encoded information, to transmit the binary encoded information outward.

In some embodiments, controlling the display of the second device to perform the bright-dark change based on the binary encoded information includes:
The second device controls the light source at the backlight layer of the display to be turned on or off based on the binary encoded information.

In embodiments of this application, turning on or off the light source is a manner of a bright-dark change performed by the display. For example, for binary encoded information "1", the second device may control the light source at the backlight layer to be turned on; or for binary encoded information "0", the second device may control the light source at the backlight layer to be turned off, so that the second device may transmit the binary encoded information by turning on or off the light source.

According to the technical solution, the second device can control the display to perform the bright-dark change based on the binary encoded information, to transmit the binary encoded information outward.

In some embodiments, controlling the display of the second device to perform the bright-dark change based on the binary encoded information includes:
The second device increases or decreases the brightness value of the pixel of the image displayed on the display based on the binary encoded information.

For example, for binary encoded information "1", the second device may increase the brightness value of the pixel of the displayed image, so that the displayed image is brighter; or for binary encoded information "0", the second device may decrease the brightness value of the pixel of the displayed image, so that the displayed image is brighter.

According to the technical solution, the second device can control the display to perform the bright-dark change based on the binary encoded information, to transmit the binary encoded information outward.

In some embodiments, the display of the second device includes the plurality of display partitions. Controlling the display of the second device to perform the bright-dark change based on the binary encoded information includes:
The second device controls the plurality of display partitions to perform the bright-dark change based on the binary encoded information in the preset sequence.

For example, refer to the related descriptions in FIG. 5 or FIG. 6. The display of the second device may be divided into the plurality of display partitions. The preset sequence may be the sequence of the display partition 1 to the display partition 4. As shown in FIG. 5, the second device may control the display partition 1 to the display partition 4 to transmit the binary encoded information "0110" at a time. Alternatively, the preset sequence may be that the second device controls each display partition to display the plurality of pieces of binary encoded information, and then the first device may splice the binary encoded information to obtain the final binary encoded information.

Based on this embodiment of this application, the display of the second device may be divided into the plurality of display partitions, and the second device may control the plurality of display partitions to perform the bright-dark change based on the binary encoded information in the preset sequence. In this way, the second device can transmit a larger amount of data outward.

In some embodiments, controlling the display of the second device to perform the bright-dark change based on the binary encoded information includes:
The second device controls the partial region of the display of the second device to perform the bright-dark change based on the binary encoded information.

For example, the partial region may be a region at a preset location of the display, or the partial region may be a region with a preset area or shape at a middle location of the display.

Based on this embodiment of this application, the second device may further control the partial region of the display to perform the bright-dark change based on the binary encoded information, without performing encoding processing on an entire region of the display. In this way, encoding overheads of the second device can be reduced, and power consumption of the second device can be reduced.

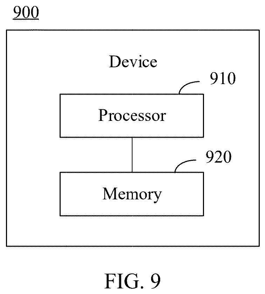

FIG. 9 is a block diagram of a device according to an embodiment of this application. As shown in FIG. 9, the device 900 may include one or more processors 910 and one or more memories 920. The one or more memories 920 store one or more programs. When the one or more programs are executed by the one or more processors 910, the device connection method described in any one of the foregoing possible implementations is performed.

In some embodiments, the device 900 may be the first device described above, for example, may be a smartphone or a tablet computer.

In some other embodiments, the device 900 may be the second device described above, for example, may be a tablet computer, a smart television, a vehicle-mounted device, or a smart home device.

An embodiment of this application further provides a system, including the first device and the second device in the foregoing embodiments.

An embodiment of this application further provides a chip. The chip includes a processor and a communication interface. The communication interface is configured to: receive a signal, and transmit the signal to the processor. The processor processes the signal, so that the device connection method in any one of the foregoing possible implementations is performed.

It may be understood that, to implement the foregoing functions, the device includes corresponding hardware and/or a corresponding software module for performing each function. With reference to algorithm steps of examples described in embodiments disclosed in this specification, this application can be implemented in a form of hardware or a combination of hardware and software. Whether a function is performed by hardware or hardware driven by software depends on particular applications and design constraints of the technical solutions. A person skilled in the art may use different methods to implement the described functions for each particular application with reference to embodiments. However, it should not be considered that the implementation goes beyond the scope of this application.

In embodiments, functional modules of the device may be obtained through division based on the foregoing method examples. For example, the functional modules may be obtained through division corresponding to various functions, or two or more functions may be integrated into one processing module. The integrated module may be implemented in a form of hardware. It should be noted that division into the modules in embodiments is an example and is merely logical function division. In practice, there may be another division manner.

An embodiment further provides a device connection apparatus, including modules configured to implement the device connection method in the foregoing embodiments.

An embodiment further provides a readable storage medium. The readable storage medium stores instructions. When the instructions are run on a device, the device is enabled to perform the foregoing related method steps to implement the device connection method in the foregoing embodiments.

An embodiment further provides a program product. When the program product runs on a device, the device is enabled to perform the foregoing related steps to implement the device connection method in the foregoing embodiments.

In addition, an embodiment of this application further provides an apparatus. The apparatus may be specifically a chip, a component, or a module. The apparatus may include a processor and a memory that are connected. The memory is configured to store executable instructions. When the apparatus runs, the processor may execute the executable instructions stored in the memory, to enable the chip to perform the device connection method in the foregoing method embodiments.

The apparatus, the device, the readable storage medium, the program product, or the chip provided in embodiments are all configured to perform the corresponding method provided above. Therefore, for beneficial effect that can be achieved by the apparatus, the device, the readable storage medium, the program product, or the chip, refer to the beneficial effect of the corresponding method provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application. However, it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device connection method, wherein the method is applied to a first device, and the method comprises:
when detecting a first operation, obtaining, by using a camera, a plurality of frames of images displayed by a second device;
determining binary encoded information based on the plurality of frames of images, wherein the binary encoded information comprises device connection information of the second device;
determining the device connection information of the second device based on the binary encoded information; and
establishing a connection relationship with the second device based on the device connection information.

2. The method according to claim 1, wherein determining the binary encoded information based on the plurality of frames of images comprises:
performing signal processing on the plurality of frames of images to obtain first bright-dark change information in the plurality of frames of images; and
determining the binary encoded information based on the first bright-dark change information.

3. The method according to claim 2, wherein performing signal processing on the plurality of frames of images to obtain the first bright-dark change information in the plurality of frames of images comprises:
identifying a partial region that has a bright-dark change in the plurality of frames of images; and
performing signal processing on the partial region in the plurality of frames of images to obtain first bright-dark change information of the partial region.

4. The method according to claim 1 or 2, wherein obtaining, by using the camera, the plurality of frames of images displayed by the second device comprises:
obtaining a plurality of frames of images of a plurality of display partitions of a display of the second device by using the camera; and
determining the binary encoded information based on the plurality of frames of images comprises:
performing signal processing on the plurality of frames of images of the plurality of display partitions in a preset sequence, to obtain second bright-dark change information in the plurality of frames of images of the plurality of display partitions; and
determining the binary encoded information based on the second bright-dark change information.

5. The method according to any one of claims 1 to 4, wherein obtaining, by using the camera, the plurality of frames of images displayed by the second device comprises:
obtaining the plurality of frames of images in a slow-motion mode of the camera.

6. The method according to any one of claims 1 to 5, wherein the device connection information comprises at least one of a connection pairing code of the second device, a product serial number of the second device, or a media access control MAC address of the second device.

7. A device connection method, wherein the method is applied to a second device, and the method comprises:
when detecting that a trigger condition is met, converting device connection information of the second device into binary encoded information, wherein the device connection information is used by the second device to establish a connection relationship with a first device; and
controlling a display of the second device to perform a bright-dark change based on the binary encoded information.

8. The method according to claim 7, wherein controlling the display of the second device to perform the bright-dark change based on the binary encoded information comprises:
controlling a light source at a backlight layer of the display to increase or decrease brightness based on the binary encoded information.

9. The method according to claim 7, wherein controlling the display of the second device to perform the bright-dark change based on the binary encoded information comprises:
controlling a light source at a backlight layer of the display to be turned on or off based on the binary encoded information.

10. The method according to claim 7, wherein controlling the display of the second device to perform the bright-dark change based on the binary encoded information comprises:
increasing a brightness value or decreasing a brightness value of a pixel of an image displayed on the display based on the binary encoded information.

11. The method according to any one of claims 7 to 10, the display comprises a plurality of display partitions, and controlling the display of the second device to perform the bright-dark change based on the binary encoded information comprises:
controlling the plurality of display partitions to perform a bright-dark change based on the binary encoded information in a preset sequence.

12. The method according to any one of claims 7 to 10, wherein controlling the display of the second device to perform the bright-dark change based on the binary encoded information comprises:
controlling a partial region of the display of the second device to perform a bright-dark change based on the binary encoded information.

13. The method according to any one of claims 7 to 12, wherein the device connection information comprises at least one of a connection pairing code of the second device, a product serial number of the second device, and a media access control MAC address of the second device.

14. A device, comprising one or more processors and one or more memories, wherein the one or more memories store one or more programs, and when the one or more programs are executed by the one or more processors, the device connection method according to any one of claims 1 to 6 is performed, or the device connection method according to any one of claims 7 to 13 is performed.

15. A chip, wherein the chip comprises a processor and a communication interface; the communication interface is configured to: receive a signal, and transmit the signal to the processor; and the processor processes the signal, so that the device connection method according to any one of claims 1 to 6 is performed, or the device connection method according to any one of claims 7 to 13 is performed.

16. A readable storage medium, wherein the readable storage medium stores instructions; and when the instructions are run on a device, the device connection method according to any one of claims 1 to 6 is performed, or the device connection method according to any one of claims 7 to 13 is performed.
